# EUROPEAN PATENT SPECIFICATION

(11) **EP 2 923 060 B1**
(45) Date of publication and mention of the grant of the patent: **07.06.2017**
(21) Application number: 13808062.7
(22) Date of filing: 11.11.2013
(51) Int. Cl.: F02M 21/02

(54) **GAS FEED SYSTEM FOR RECIPROCATING ENGINE AND INSTALLATION METHOD**
GASZUFÜHRUNGSSYSTEM FÜR VERBRENNUNGSMOTOR UND INSTALLATIONSMETHODE
SYSTÈME D'ALIMENTATION DE GAZ POUR UN MOTEUR ALTERNATIF ET PROCEDE D'INSTALLATION

(30) Priority: 13.11.2012 FI 20126190
(43) Date of publication of application: 30.09.2015
(73) Proprietor: Wärtsilä Finland Oy, 65380 Vaasa (FI)
(72) Inventor: HÄGGBLOM, Daniel, FI-65630 Karperö (FI)
(74) Representative: Berggren Oy, Helsinki & Oulu
(86) International application number: PCT/FI2013/051058
(87) International publication number: WO 2014/076367

(56) References cited:
- EP-A1- 2 011 996
- WO-A1-2008/004866
- WO-A1-2012/070946
- US-B1- 7 415 968

## Description

The invention relates to a gas feed system for a reciprocating engine.

Gas operated reciprocating engines use gas feed valves to feed gaseous fuel into the intake ports of the cylinders. In the intake ports the gaseous fuel is mixed with combustion air of the engine and thereafter conducted into the cylinders. Each intake port is provided with its own gas feed valve. Gaseous fuel can be fed to the gas feed valves via a gas manifold, which is connected to all gas feed valves of the cylinders of the cylinder bank. For example, US 2008/0184964 A1 and WO 2008/004866 disclose such a gas feed systems. The object of the present invention is to provide an improved gas feed system for a reciprocating engine.

The object of the present invention can be achieved by a gas feed system.

The gas feed system according to the invention comprises intake ports for conducting combustion air and gaseous fuel into cylinders of the engine, gas feed valves for feeding gaseous fuel into the intake ports, wherein each intake port is provided with its own gas feed valve, and valve housings surrounding the gas feed valves. The gas feed system further comprises separate gas line portions for conducting gaseous fuel to the gas feed valves, each gas line portion being arranged between two adjacent valve housings so that one end of the gas line portion is in one of the valve housings and the other end is in the other valve housing.

The gas feed system according to the invention has a modular design, which enables the use of the system in different engine configurations, for example in engines having a different number of cylinders. Since the ends of the gas line portions are inserted into adjacent valve housings, the valve housings support the gas line portions, and no separate bracket or other support structure is needed. This shortens the installation time of the gas feed system. The gas feed valves can be easily serviced, since only the cover of the valve housing of the gas feed valve to be serviced must be removed. Further, the gas feed system according to the invention can be implemented without welded structures, which lowers the manufacturing costs of the system and is an advantage especially in corrosive and vibrating environments.

According to an embodiment of the invention, each valve housing is provided with a securing mechanism for securing the end of the gas line portion in the desired position within the valve housing.

According to the invention, the gas line portions comprise an inner gas line portion for gaseous fuel and an outer gas line portion for collecting possibly leaking gaseous fuel, the inner gas line portion being arranged inside the outer gas line portion. A leak space can be provided between the outer surface of the inner gas line portion and the inner surface of the outer gas line portion, the leak space being in flow connection with the interior of the valve housing. The valve housing can be provided with a sensor for measuring content of the gaseous fuel in the interior of the valve housing.

According to an embodiment of the invention, each valve housing is mounted to the respective intake port.

According to the invention a connecting piece is arranged inside each valve housing for forming a flow connection between a gas line portion and the inlet of the gas feed valve. With the connecting piece the whole gas feed system can be made double-walled.

In the method of installing the gas feed system, a first valve housing is mounted to a first intake port, an end of a first gas line portion is inserted into the first valve housing, a second valve housing is mounted to a second intake port, which second valve housing is adjacent to the first valve housing, and the first gas line portion is moved outward from the first valve housing and the other end of the first gas line portion is inserted into the second valve housing so that one end of the first gas line portion is in the first valve housing and the other end in the second valve housing.

After installing the second valve housing, an end of a second gas line portion can be introduced into the second valve housing, a third valve housing is mounted to a third intake port, which third valve housing is adjacent to the second valve housing, and the second gas line portion is moved outward from the second valve housing and the other end of the second gas line portion is inserted into the third valve housing so that one end of the second gas line portion is in the second valve housing and the other end in the third valve housing.

If the gas line portion comprises an inner gas line portion and an outer gas line portion, an end of the inner gas line portion and an end of the outer gas line portion of the first gas line portion are inserted into the first valve housing, the second valve housing is mounted to the second intake port, the inner gas line portion is moved outward from the first valve housing and the other end of the inner gas line is inserted into the second valve housing, and the outer gas line portion is moved outward from the first valve housing and the other end of the outer gas line portion is inserted into the second valve housing.

In the following the invention will be described by way of examples with reference to the accompanying drawings, in which:
Fig. 1 shows schematically a gas feed system according to an embodiment of the invention,

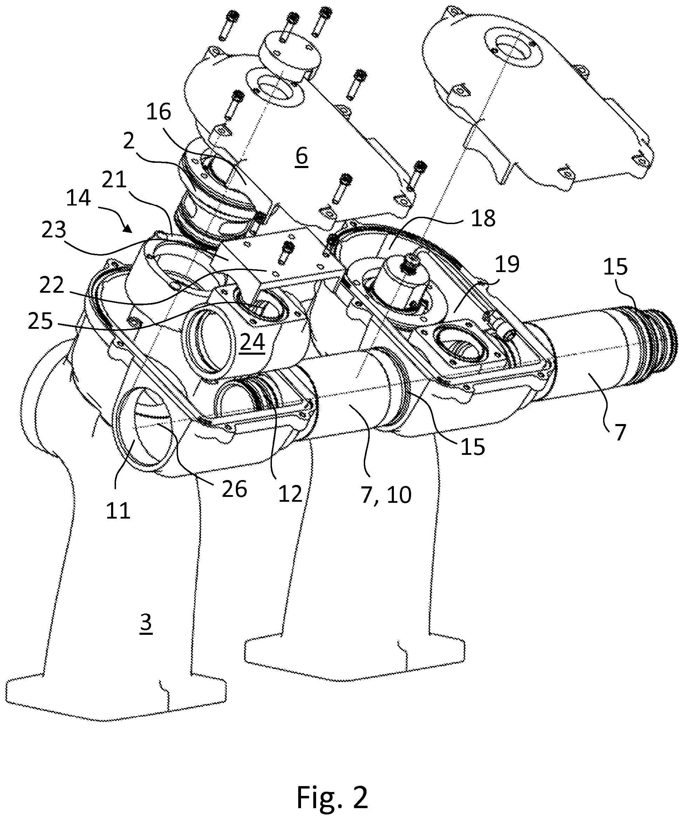

Fig. 2 shows two adjacent valve housings of the gas feed system of fig. 1 and a gas line portion arranged between the valve housings,

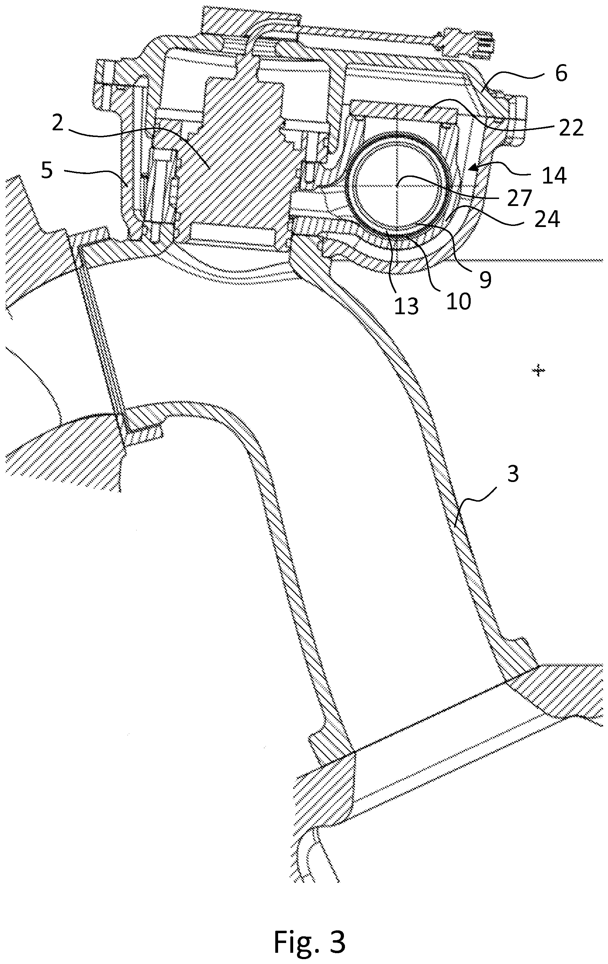

Fig. 3 is a cross sectional view of the valve housings and the gas line portion of fig. 2, and

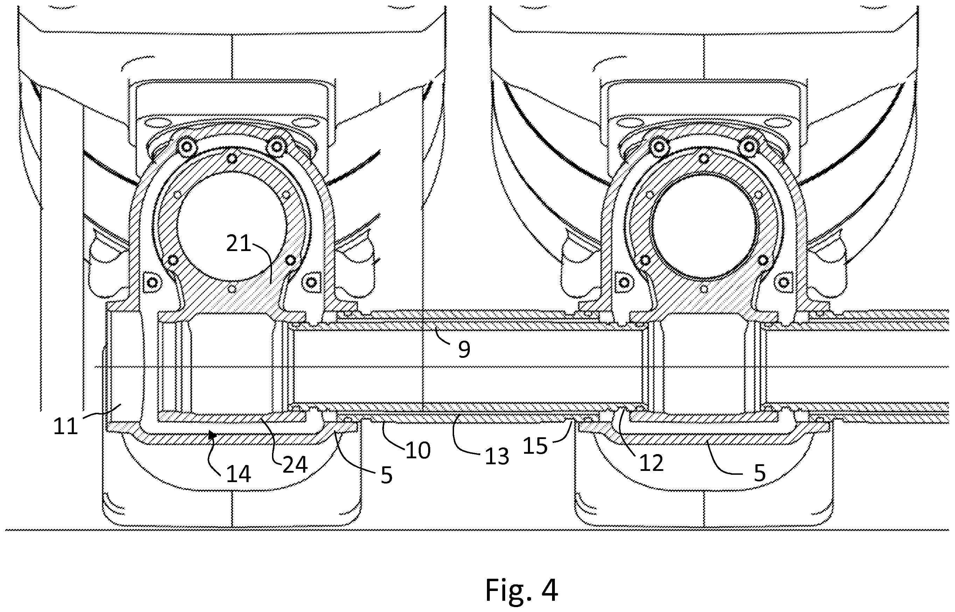

Fig. 4 is a cross sectional view of an inlet port and a valve housing of fig. 2.

The drawings show a gas feed system 1 of a reciprocating engine. The reciprocating engine is operated with a gaseous fuel, such as methane. The engine can be a gas engine, which is solely operated by gaseous fuel. Gaseous fuel is mixed with combustion air in intake ports 3 of the cylinders 4. Some gaseous fuel is also fed into a prechamber, where it is ignited by a spark plug. Flames from the prechamber ignite the gas/air mixture in the cylinder 4. Alternatively, the engine can be a so-called duel fuel engine, which can be operated in two modes. In a liquid fuel mode liquid fuel, such as diesel or heavy fuel oil, is directly injected into the cylinders 4 of the engine as a sole source of energy during combustion. In a gas mode (or a dual fuel mode) a gaseous fuel is mixed with combustion air in intake ports 3 of the cylinders 4 and a small amount of liquid pilot fuel is injected into the cylinders 4 in order to ignite the mixture of air and gaseous fuel. Typically, the pilot fuel consumption in the gas mode is less than 5% of the total fuel consumption.

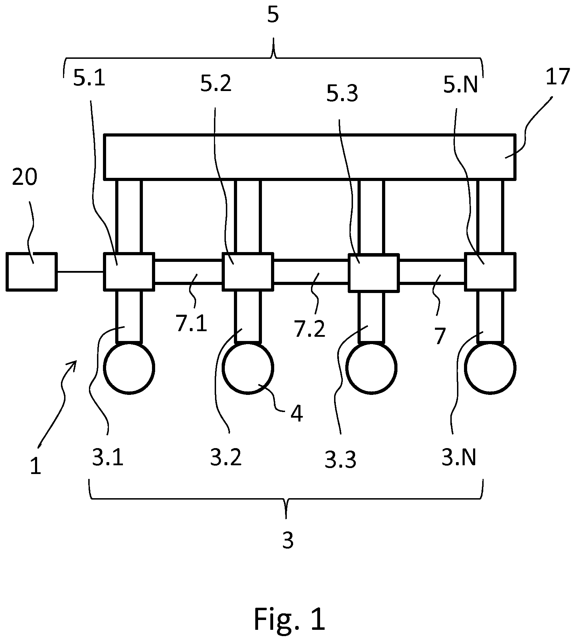

The engine is a large reciprocating engine, which can be used as a main and/or an auxiliary engine in ships and/or in power plants for generation of electricity and/or heat. The engine is a medium speed, four-stroke engine. However, the invention can also be applied to high-speed engines. The rotational speed of the engine is typically 300-1500 rpm. Cylinders 4 of the engine can be arranged in a single bank or in two banks in a V-configuration. In the embodiment of fig. 1 the cylinders 4 are arranged in a single bank. The engine can be provided with a turbocharger.

The engine comprises an air receiver 17 for storing combustion air. The engine further comprises a gas feed system 1 for conducting gaseous fuel from a gas source 20, such as a gas tank, into the cylinders 4. The gas feed system 1 comprises intake ports 3 for conducting combustion air from the air receiver 17 and gaseous fuel into the cylinders 4. Each cylinder 4 is provided with its own intake port 3. If each of the cylinders 4 of the engine is provided with more than one intake valve each intake port 3 can be divided into two or more branches, which lead to the intake valves. Part of the intake port 3 is arranged inside the cylinder head. The gas feed system 1 further comprises gas feed valves 2 for feeding gaseous fuel into intake ports 3. Each intake port 3 is provided with its own gas feed valve 2. The gas feed valve 2 is mounted to the intake port 3. Further, each gas feed valve 2 is surrounded by a separate valve housing 5. The valve housing 5 is also mounted to the intake port 3. The gas feed valve 2 and the surrounding valve housing 5 are thus in close proximity to the intake port 3. The valve housing 5 is provided with a releasable cover 6.

The gas feed system 1 comprises separate gas line portions 7 for conducting gaseous fuel to the gas feed valves 2. Each gas line portion 7 is arranged between two adjacent valve housings 5. The gas line portions 7 can be arranged between adjacent valve housings 5 of the cylinders 4 that are in the same cylinder bank. One end of the gas line portion 7 is inserted into a valve housing 5 and the other end is inserted into an adjacent valve housing 5. The valve housing 5 comprises two openings 11, through which the gas line portions 7 can be inserted into the valve housing 5. The openings 11 are located on the opposite sides of the valve housing 5. The openings 11 may have a common central axis 26. The openings 11 of the adjacent valve housings 5 face each other. The central axes 27 of the gas line portions 7 are straight.

A connecting piece 14 is placed in the valve housing 5. The connecting piece 14 forms a flow connection between the two gas line portions 7 that are inserted into said valve housing 5. Naturally, in those valve housings 5 that are at the ends of a cylinder bank, there is only one gas line portion 7 inserted into the valve housing 5. However, a similar part can be used for supplying gas from the gas source 20 to the gas feed valve 2 of the first cylinder 4 of the cylinder bank. The connecting piece 14 also forms a flow connection between said gas line portions 7 and the inlet of the gas feed valve 2. Because of the connecting pieces 14 that are arranged inside the valve housings 5, the whole gas supplying system is double walled. The connecting piece 14 comprises an annular flange 21, through which the gas feed valve 2 is installed to the intake port 3. At the end of the gas line, one end of the connecting piece 14 can be connected to a bleed line, through which gas can removed from the system when the engine is not operated. The bleed line can be designed so that the valve housing 5 and the connecting piece 14 of the last cylinder 4 of the cylinder bank can be identical to the parts 5, 14 of the other cylinders 4.

The gas line portion 7 comprises an inner gas line portion 9 for gaseous fuel and an outer gas line portion 10 for collecting possibly leaking gaseous fuel.

The inner gas line portion 9 is arranged inside the outer gas line portion 10. A leak space 13 is provided between the outer surface of the inner gas line portion 9 and the inner surface of the outer gas line portion 10. The leak space 13 is in flow connection with an interior 18 of the valve housing 5. The valve housing 5 can be provided with a sensor 19 for measuring content of gaseous fuel in the interior 18 of the valve housing 5. Thus, possible fuel leaks from the inner gas line portion 9 can be detected.

The valve housing 5 is provided with a securing mechanism for securing the end of the gas line portion 7 in the desired position within the valve housing 5. The gas line portion 7 is capable of moving deeper into the valve housing 5 when the end of said gas line portion 7 is released from the securing mechanism. The securing mechanism can be mounted to the cover 6 of the valve housing 5.

In the embodiment shown in the drawings, the securing mechanism comprises a first mechanism for securing the end of the inner gas line portion 9 in the desired position within the valve housing 5. The first mechanism is formed of a securing element 22 that can be attached to the connecting piece 14. The outer surface of the inner gas line portion 9 is provided with a groove 12 and the securing element 22 with a projection 23 that engages the groove 12 and thus secures the end of the inner gas line portion 9 in its place. The securing mechanism also comprises a second mechanism for securing the end of the outer gas line portion 10 in the desired position within the valve housing 5. The outer gas line portion 10 is provided with a second groove 15 and the cover 6 of the valve housing with a second projection 16 that engages the second groove 15 and thus secures the end of the outer gas line portion 10 in its place.

In the embodiment shown in the drawings the connecting piece 14 forms a flow connection between the two inner gas line portions 9, which are inserted into the valve housing 5, and the inlet of the gas feed valve 2. The connecting piece 14 comprises a cylindrical part 24, in which the ends of inner gas flow portions 9 are inserted. The connecting piece 14 comprises an opening 25 through which the inner gas line portions 9 can be moved when the securing element 22 is detached from the connecting piece 14.

The inner gas line portion 9 is capable of moving deeper into the valve housing 5 when the inner gas line portion 9 is released from the first securing mechanism i.e. the securing element 22 is detached from the connecting piece 14. Also the outer gas line portion 10 is capable of moving deeper into the valve housing 5, when the outer gas line portion 10 is released from the second securing mechanism i.e. the cover 6 is removed from the valve housing 5.

The gas feed system 1 can be installed in connection with the engine as follows. Reference is made to fig. 1, which shows a gas feed system having adjacent valve housings 5, 5.1-5.N that are mounted to the adjacent intake ports 3, 3.1-3.N. The first valve housing 5.1 is mounted to the first intake port 3.1. Thereafter, the connecting piece 14 (not shown in fig. 1) is placed in the first valve housing 5.1. The gas feed valve 2 is mounted to the first intake port 3.1. The ends of the inner and outer gas line portions of the first gas line portion 7.1 are inserted into the first valve housing 5.1 through the opening 11. The end of the inner gas line portion 9 is inserted into the connecting piece 14. The ends of the inner and outer gas line portions are inserted to such a depth that the other ends of said gas line portions do not hamper the installation of the second valve housing 5.2 to the second intake port 3.2.

Thereafter, the second valve housing 5.2 is mounted to the second intake port 3.2. The first intake port 3.1 is adjacent to the second intake port 3.2. The first valve housing 5.1 is adjacent to the second valve housing 5.2. The connecting piece 14 is placed in second the valve housing 5.2. The gas feed valve 2 is mounted to the second intake port 3.2. Thereafter, the inner gas line portion 9 is moved outward from the first valve housing 5.1 and the other end of the inner gas line portion 9 is inserted into the second valve housing 5.2 through the opening 11, which faces the opening 11 of the first valve housing 5.1. The other end of the inner gas line portion 9 is inserted into the connecting piece 14. Thereafter, the outer gas line portion 10 is moved outward from the first valve housing 5.1 and the other end of outer gas line portion 10 is inserted into the second valve housing 5.2. Thus, one end of the first gas line portion 7.1 is in the first valve housing 5.1 and the other end in the second valve housing 5.2. The end of the inner gas line portion is secured in its place by attaching the securing element 22 to the connecting piece 14 of the first valve housing 5.1. The end of the outer gas line portion 10 is secured in its place by attaching the cover 6 to first the valve housing 5.1.

Thereafter, the ends of the inner and outer gas line portions of the a second gas line portion 7.2 are inserted into the second valve housing 5.2 to such a depth that the other ends of said gas line portions do not hamper the installation of the third valve housing 5.3 to the third intake port 3.3. The third valve housing 5.3 is mounted to the third intake port 3.3. The second intake port 3.2 is adjacent to the third intake port 3.3. The second valve housing 5.2 is adjacent to the third valve housing 5.3. The connecting piece 14 is placed in the third valve housing 5.3. The gas feed valve 2 is mounted to the third intake port 3.3. The inner gas line portion 9 is moved outward from the second valve housing 5.2 and the other end of the inner gas line portion 9 is inserted into the third valve housing 5.3. Thereafter, the outer gas line portion 10 is moved outward from the second valve housing 5.2 and the other end of the outer gas line portion 10 is inserted into the third valve housing 5.3. Thus, one end of the second gas line portion 7.2 is in the second valve housing 5.2 and the other end in the third valve housing 5.3. The ends of the inner gas line portions 9 that are in the second valve housing 5.2 are secured by attaching the securing element 22 to the connecting piece 14 of the second valve housing 5.2. The ends of the outer gas line portions 10 that are in the second valve housing 5.2 are secured by attaching the cover 6 to the second valve housing 5.2.

The other valve housings 5, gas feed valves 2 and the gas line portions 7 of the gas feed system 1 can be installed in a similar manner. One valve housing 5, typically the valve housing of the cylinder 4 at the end of the cylinder bank, is connected to the gas source 20.

## Claims

1. A gas feed system (1) for a reciprocating engine, the gas feed system (1) comprising:
- intake ports (3) for conducting combustion air and gaseous fuel into cylinders (4) of the engine,
- gas feed valves (2) for feeding gaseous fuel into the intake ports (3), wherein each intake port (3) is provided with its own gas feed valve (2),
- valve housings (5) surrounding the gas feed valves (2), and
- separate gas line portions (7) for conducting gaseous fuel to the gas feed valves (2), each gas line portion (7) being arranged between two adjacent valve housings (5) so that one end of the gas line portion (7) is in one of the valve housings (5) and the other end is in the other valve housing (5),
**characterized in that** the gas line portions (7) comprise an inner gas line portion (9) for gaseous fuel and an outer gas line portion (10) for collecting possibly leaking gaseous fuel, the inner gas line portion (9) being arranged inside the outer gas line portion (10) and that a connecting piece (14) is arranged inside each valve housing (5) for forming a flow connection between a gas line portion (7) and the inlet of the gas feed valve (2).

2. The gas feed system according to claim 1, **characterized in that** each valve housing (5) is provided with a securing mechanism (16, 22) for securing the end of the gas line portion (7) in the desired position within the valve housing (5).

3. The gas feed system (1) according to claim 2, **characterized in that** the gas line portion (7) is capable of moving deeper into the valve housing (5), when said gas line portion (7) is released from the securing mechanism (16, 22).

4. The gas feed system (1) according to claim 1, **characterized in that** a leak space (13) is provided between the outer surface of the inner gas line portion (9) and the inner surface of the outer gas line portion (10), and said leak space (13) is in flow connection with the interior (18) of the valve housing (5).

5. The gas feed system (1) according to claim 4, **characterized in that** the valve housing (5) is provided with a sensor (19) for measuring content of the gaseous fuel in the interior (18) of the valve housing (5).

6. The gas feed system (1) according to claim 1, **characterized in** the central axes (27) of the gas line portions (7) are straight.

7. The gas feed system (1) according to claim 1 or 6, **characterized in that** the valve housings (5) are provided with openings (11), through which the gas line portions (7) are inserted into the valve housings (5), and that the openings of the adjacent valve housings (5) face each other.

8. The gas feed system (1) according to any of the preceding claims, **characterized in that** each valve housing (5) is mounted to the respective intake port (3).

9. A method of installing the gas feed system (1) according to any of claims 1-8 in connection with the reciprocating engine, in which method a first valve housing (5.1) is mounted to a first intake port (3.1), **characterized in that**
- an end of a first gas line portion (7.1) is inserted into the first valve housing (5.1),
- a second valve housing (5.2) is mounted to a second intake port (3.2), which second valve housing (5.2) is adjacent to the first valve housing (5.1), and
- the first gas line portion (7.1) is moved outward from the first valve housing (5.1) and the other end of the first gas line portion (7.1) is inserted into the second valve housing (5.2) so that one end of the first gas line portion (7.1) is in the first valve housing (5.1) and the other end in the second valve housing (5.2).

10. The method according to claim 9, **characterized in that**
- an end of a second gas line portion (7.2) is introduced into the second valve housing (5.2).
- a third valve housing (5.3) is mounted to a third intake port (3.3), which third valve housing (5,3) is adjacent to the second valve housing (5.2), and
- the second gas line portion (7.2) is moved outward from the second valve housing (5.2) and the other end of the second gas line portion (7.2) is inserted into the third valve housing (5.3) so that one end of the second gas line portion (7.2) is in the second valve housing (5.2) and the other end in the third valve housing (5.3).

11. The method according to claim 9 or 10, **characterized in that** the gas line portion (7.1, 7.2) comprises an inner gas line portion (9) and an outer gas line portion (10), and that
- an end of the inner gas line portion (9) and an end of the outer gas line portion (10) of the first gas line portion (7.1) are inserted into the first valve housing (5.1),
- the second valve housing (5.2) is mounted to the second intake port (3.2),
- the inner gas line portion (9) is moved outward from the first valve housing (5.1) and the other end of the inner gas line portion (9) is inserted into the second valve housing (5.2), and
- the outer gas line portion (10) is moved outward from the first valve housing (5.1) and the other end of the outer gas line portion (10) is inserted into the second valve housing (5.2).

## Patentansprüche

1. Gaszuführungssystem (1) für einen Verbrennungsmotor, wobei das Gaszuführungssystem (1) Folgendes umfasst:
- Einlassanschlüsse (3) zum Leiten von Verbrennungsluft und gasförmigem Kraftstoff in Zylinder (4) des Motors,
- Gaszuführungsventile (2) zum Zuführen von gasförmigem Kraftstoff in die Einlassanschlüsse (3), wobei jeder Einlassanschluss (3) mit seinem eigenen Gaszuführungsventil (2) versehen ist,
- Ventilgehäuse (5), die die Gaszuführungsventile (2) umgeben, und
- separate Gasleitungsabschnitte (7) zum Leiten von gasförmigem Kraftstoff zu den Gaszuführungsventilen (2), wobei jeder Gasleitungsabschnitt (7) derart zwischen zwei benachbarten Ventilgehäusen (5) angeordnet ist, dass sich ein Ende des Gasleitungsabschnitts (7) in einem der Ventilgehäuse (5) befindet und sich das andere Ende in dem anderen Ventilgehäuse (5) befindet,
**dadurch gekennzeichnet, dass** die Gasleitungsabschnitte (7) einen inneren Gasleitungsabschnitt (9) für gasförmigen Kraftstoff und einen äußeren Gasleitungsabschnitt (10) zum Sammeln von möglicherweise austretendem gasförmigem Kraftstoff umfassen, wobei der innere Gasleitungsabschnitt (9) innerhalb des äußeren Gasleitungsabschnitts (10) angeordnet ist, und dass ein Verbindungsstück (14) innerhalb von jedem Ventilgehäuse (5) angeordnet ist, um eine Strömungsverbindung zwischen einem Gasleitungsabschnitt (7) und dem Einlass des Gaszuführungsventils (2) zu bilden.

2. Gaszuführungssystem nach Anspruch 1, **dadurch gekennzeichnet, dass** jedes Ventilgehäuse (5) mit einem Sicherungsmechanismus (16, 22) zum Sichern des Endes des Gasleitungsabschnitts (7) in der gewünschten Position innerhalb des Ventilgehäuses (5) versehen ist.

3. Gaszuführungssystem (1) nach Anspruch 2, **dadurch gekennzeichnet, dass** der Gasleitungsabschnitt (7) in der Lage ist, sich tiefer in das Ventilgehäuse (5) zu bewegen, wenn der Gasleitungsabschnitt (7) von dem Sicherungsmechanismus (16, 22) freigegeben wird.

4. Gaszuführungssystem (1) nach Anspruch 1, **dadurch gekennzeichnet, dass** ein Leckageraum (13) zwischen der äußeren Fläche des inneren Gasleitungsabschnitts (9) und der inneren Fläche des äußeren Gasleitungsabschnitts (10) bereitgestellt ist, und wobei sich der Leckageraum (13) in einer Strömungsverbindung mit dem Inneren (18) des Ventilgehäuses (5) befindet.

5. Gaszuführungssystem (1) nach Anspruch 4, **dadurch gekennzeichnet, dass** das Ventilgehäuse (5) mit einem Sensor (19) zum Messen des Gehalts des gasförmigen Kraftstoffs in dem Inneren (18) des Ventilgehäuses (5) versehen ist.

6. Gaszuführungssystem (1) nach Anspruch 1, **dadurch gekennzeichnet, dass** die zentralen Achsen (27) der Gasleitungsabschnitte (7) gerade sind.

7. Gaszuführungssystem (1) nach Anspruch 1 oder 6, **dadurch gekennzeichnet, dass** die Ventilgehäuse (5) mit Öffnungen (11) versehen sind, durch welche die Gasleitungsabschnitte (7) in die Ventilgehäuse (5) eingeführt werden, und dass die Öffnungen der benachbarten Ventilgehäuse (5) einander gegenüberliegen.

8. Gaszuführungssystem (1) nach einem der vorherigen Ansprüche, **dadurch gekennzeichnet, dass** jedes Ventilgehäuse (5) an dem jeweiligen Einlassanschluss (3) montiert ist.

9. Verfahren zum Installieren des Gaszuführungssystems (1) nach einem der Ansprüche 1-8 in Verbindung mit dem Verbrennungsmotor, wobei bei dem Verfahren ein erstes Ventilgehäuse (5.1) an einem ersten Einlassanschluss (3.1) montiert wird, **dadurch gekennzeichnet, dass**
- ein Ende eines ersten Gasleitungsabschnitts (7.1) in das erste Ventilgehäuse (5.1) eingeführt wird,
- ein zweites Ventilgehäuse (5.2) an einem zweiten Einlassanschluss (3.2) montiert wird, wobei das zweite Ventilgehäuse (5.2) zu dem ersten Ventilgehäuse (5.1) benachbart ist, und
- der erste Gasleitungsabschnitt (7.1) von dem ersten Ventilgehäuse (5.1) nach außen bewegt wird und das andere Ende des ersten Gasleitungsabschnitts (7.1) derart in das zweite Ventilgehäuse (5.2) eingeführt wird, dass sich ein Ende des ersten Gasleitungsabschnitts (7.1) in dem ersten Ventilgehäuse (5.1) befindet und sich das andere Ende in dem zweiten Ventilgehäuse (5.2) befindet.

10. Verfahren nach Anspruch 9, **dadurch gekennzeichnet, dass**
- ein Ende eines zweiten Gasleitungsabschnitts (7.2) in das zweite Ventilgehäuse (5.2) eingeführt wird,
- ein drittes Ventilgehäuse (5.3) an einem dritten Einlassanschluss (3.3) montiert wird, wobei das dritte Ventilgehäuse (5.3) zu dem zweiten Ventilgehäuse (5.2) benachbart ist, und
- der zweite Gasleitungsabschnitt (7.2) von dem zweiten Ventilgehäuse (5.2) nach außen bewegt wird und das andere Ende des zweiten Gasleitungsabschnitts (7.2) derart in das dritte Ventilgehäuse (5.3) eingeführt wird, dass sich ein Ende des zweiten Gasleitungsabschnitts (7.2) in dem zweiten Ventilgehäuse (5.2) befindet und sich das andere Ende in dem dritten Ventilgehäuse (5.3) befindet.

11. Verfahren nach Anspruch 9 oder 10, **dadurch gekennzeichnet, dass** der Gasleitungsabschnitt (7.1, 7.2) einen inneren Gasleitungsabschnitt (9) und einen äußeren Gasleitungsabschnitt (10) umfasst, und dass
- ein Ende des inneren Gasleitungsabschnitts (9) und ein Ende des äußeren Gasleitungsabschnitts (10) des ersten Gasleitungsabschnitts (7.1) in das erste Ventilgehäuse (5.1) eingeführt werden,
- das zweite Ventilgehäuse (5.2) an dem zweiten Einlassanschluss (3.2) montiert wird,
- der innere Gasleitungsabschnitt (9) von dem ersten Ventilgehäuse (5.1) nach außen bewegt wird und das andere Ende des inneren Gasleitungsabschnitts (9) in das zweite Ventilgehäuse (5.2) eingeführt wird, und
- der äußere Gasleitungsabschnitt (10) von dem ersten Ventilgehäuse (5.1) nach außen bewegt wird und das andere Ende des äußeren Gasleitungsabschnitts (10) in das zweite Ventilgehäuse (5.2) eingeführt wird.

## Revendications

1. Système d'alimentation en gaz (1) pour moteur alternatif, ce système d'alimentation en gaz (1) comprenant :
- des ports d'admission (3) pour conduire de l'air de combustion et du carburant gazeux dans des cylindres (4) du moteur,
- des vannes d'alimentation en gaz (2) pour apporter du carburant gazeux au port d'admission (3), chaque port d'admission (3) étant pourvu de sa propre vanne d'alimentation en gaz (2),
- des boîtiers de vannes (5) entourant les vannes d'alimentation en gaz (2), et
- des sections de ligne de gaz séparées (7) pour conduire du carburant gazeux dans les vannes d'alimentation en gaz (2), chaque section de ligne de gaz (7) étant disposée entre deux boîtiers de vannes adjacents (5) de manière à ce qu'une extrémité de la section de ligne de gaz (7) se trouve dans un des boîtiers de vannes (5) et l'autre dans l'autre boîtier de vanne (5),
**caractérisé en ce que** les sections de ligne de gaz (7) comprennent une section de ligne de gaz interne (9) pour du carburant gazeux et une section de ligne de gaz externe (10) pour connecter du carburant gazeux éventuellement en train de de fuir, la section de ligne de gaz interne (9) étant disposée à l'intérieur de la section de ligne de gaz externe (10) et qu'une pièce de connexion (14) est disposée dans chaque boîtier de vanne (5) pour former une connexion de flux entre une section de ligne de gaz (7) et l'entrée de la vanne d'alimentation en gaz (2).

2. Système d'alimentation en gaz selon la revendication 1, **caractérisé en ce que** chaque boîtier de vanne (5) est pourvu d'un mécanisme de blocage (16, 22) pour bloquer l'extrémité de la section de ligne de gaz (7) dans la position désirée dans le boîtier de vanne (5).

3. Système d'alimentation en gaz (1) selon la revendication 2, **caractérisé en ce que** la section de ligne de gaz (7) est capable de rentrer plus profondément dans le boîtier de vanne (5) lorsque ladite section de ligne de gaz (7) est relâchée par le dispositif de blocage (16, 22).

4. Système d'alimentation en gaz (1) selon la revendication 1, **caractérisé en ce qu'**un espace de fuite (13) est prévu entre surface de la section de ligne de gaz interne (9) et la surface intérieure de la section de ligne de gaz externe (10), et que ledit espace de fuite (13) est en connexion de flux avec l'intérieur (18) du boîtier de vanne (5).

5. Système d'alimentation en gaz (1) selon la revendication 4, **caractérisé en ce que** le boîtier de vanne (5) est pourvu d'un capteur (19) pour mesurer le contenu de carburant gazeux dans l'intérieur (18) du boîtier de vanne (5).

6. Système d'alimentation en gaz (1) selon la revendication 1, **caractérisé en ce que** les axes centraux (27) des sections de ligne de gaz (7) sont droits.

7. Système d'alimentation en gaz (1) selon la revendication 1 ou 6, **caractérisé en ce que** les boîtiers de vanne (5) sont pourvus d'ouvertures (11) à travers lesquelles les sections de ligne de gaz (7) sont insérées dans les boîtiers de vanne (5), et que les ouvertures des boîtiers de vannes adjacents (5) se font face.

8. Système d'alimentation en gaz (1) selon l'une quelconque des revendications précédentes, **caractérisé en ce que** chaque boîtier de vanne (5) est monté sur le port d'admission respectif (3).

9. Procédés d'installation du système d'alimentation en gaz (1) selon l'une quelconque des revendications 1 à 8 en connexion avec le moteur alternatif, dans lequel procédé un premier boîtier de vanne (5,1) est monté sur un premier port d'admission (3.1), **caractérisé en ce**
- **qu'**une extrémité d'une première section de ligne de gaz (7.1) est insérée dans le premier boîtier de vanne (5.1),
- **qu'**un deuxième boîtier de vanne (5.2) est monté sur un deuxième port d'admission (3.2), lequel deuxième boîtier de vanne (5.2) est adjacent au premier boîtier de vanne (5.1), et
- **que** la première section de ligne de gaz (7,1) est montée à l'extérieur du premier boîtier de vanne (5.1) et que l'autre extrémité de la première section de ligne de gaz (7.1) est insérée dans le deuxième boîtier de vanne (5.2) de manière à ce qu'une extrémité de la première section de ligne de gaz (7.1) se trouve dans le premier boîtier de vanne (5.1) et l'autre extrémité dans le deuxième boîtier de vanne (5.2).

10. Procédé selon la revendication 9, **caractérisé en ce**
- **qu'**une extrémité d'une deuxième section de ligne de gaz (7.2) est introduite dans le deuxième boîtier de vanne (5.2),
- **qu'**un troisième boîtier de vanne (5.3) est monté sur un troisième port d'admission (3.3), lequel troisième boîtier de vanne (5,3) est adjacent au deuxième boîtier de vanne (5.2), et
- **que** la deuxième section de ligne de gaz (7.2) est sortie du second boîtier de vanne (5.2) et que l'autre extrémité de la deuxième section de ligne de gaz (7.2) est insérée dans le troisième boîtier de vanne (5.3) de manière à ce qu'une extrémité de la deuxième section de ligne de gaz (7.2) se trouve dans le deuxième boîtier de vanne (5.2) et l'autre extrémité dans le troisième boîtier de vanne (5.3).

11. Procédé selon la revendication 9 ou 10, **caractérisé en ce que** la section de ligne de gaz (7.1, 7.2) comprend une section de ligne de gaz interne (9) et une section de ligne de gaz externe (10), et
- qu'une extrémité de la section de ligne de gaz interne (9) est une extrémité de la section de ligne de gaz externe (10) de la première section de ligne de gaz (7.1) sont insérées dans le premier boîtier de vanne (5.1),
- que le deuxième boîtier de vanne (5.2) est monté sur le deuxième port d'admission (3.2),
- que la section de ligne de gaz interne (9) est sortie du premier boîtier de vanne (5.1) et que l'autre extrémité de la section de ligne de gaz interne (9) est insérée dans le deuxième boîtier de vanne (5.2), et
- que la section de ligne de gaz externe (10) est sortie du premier boîtier de vanne (5.1) et l'autre extrémité de la section de ligne de gaz externe (10) est insérée dans le deuxième boîtier de vanne (5.2).
